Europäisches Patentamt

European Patent Office

Office européen des brevets

(19)

(11) Numéro de publication : **0 082 037 B1**

(12) **FASCICULE DE BREVET EUROPÉEN**

(45) Date de publication du fascicule du brevet :
11.02.87

(51) Int. Cl.⁴ : **H 04 B 9/00**, H 04 L 11/16

(21) Numéro de dépôt : **82402143.0**

(22) Date de dépôt : **24.11.82**

(54) **Système numérique par transmission optique d'informations.**

(30) Priorité : **25.11.81 FR 8122070**

(43) Date de publication de la demande :
**22.06.83 Bulletin 83/25**

(45) Mention de la délivrance du brevet :
**11.02.87 Bulletin 87/07**

(84) Etats contractants désignés :
**AT BE CH DE GB IT LI LU NL SE**

(56) Documents cités :
**US-A- 4 227 260**
**US-A- 4 234 968**
**PATENTS ABSTRACTS OF JAPAN, vol. 2, no. 70, 26 mai 1978, page 2591E78;**

(73) Titulaire : **SOCIETE ANONYME DE TELECOMMUNI-CATIONS**
**41, rue Cantagrel**
**F-75624 Paris Cedex 13 (FR)**

(72) Inventeur : **Biolley, Alain Pierre**
**46, avenue Mozart**
**F-75016 Paris (FR)**
Inventeur : **Boulaye, Jean Michel**
**137, rue de la Paix**
**F-91360 Villemoisson sur Orge (FR)**
Inventeur : **Maurel, Bernard François**
**163, rue de Charonne**
**F-75011 Paris (FR)**

(74) Mandataire : **Martinet & Lapoux**
**62, rue des Mathurins**
**F-75008 Paris (FR)**

EP 0 082 037 B1

## Description

La présente invention se rapporte d'une manière générale à la transmission numérique d'informations ou données à travers un support de transmission optique bidirectionnelle.

Plus particulièrement l'invention a trait à un système numérique de transmission d'informations qui comprend essentiellement des stations ayant chacune un émetteur et un récepteur et des moyens pour gérer les émissions et les réceptions d'informations entre les stations. Les stations et les moyens de gestion sont raccordés au support de . transmission optique de telle sorte qu'un émetteur d'une station déterminée puisse être en communication avec les récepteurs d'une ou plusieurs stations déterminées. Le support de transmission, habituellement appelé bus optique, est constitué par une ou plusieurs fibres optiques placées en guirlande ou en étoile qui assure la liaison entre les émetteurs et les récepteurs *via* les moyens de gestion. Les informations transmises en ligne se présentent usuellement comme une suite d'impulsions lumineuses ou bits résultant d'un codage connu, par exemple d'une modulation par impulsions codées (MIC).

Un message est formé d'une suite de bits acheminés d'un émetteur d'une station déterminée vers un ou plusieurs récepteurs d'autres stations. Ce message peut comprendre outre des données utiles, des informations de service, de synchronisation, d'adresse et toute autre information nécessaire à la transmission de ce message.

Des systèmes de transmission par bus optique sont déjà connus. La demande de brevet français FR-A-2 473 823 décrit un système de transmission par bus optique, dans lequel chaque émetteur est en communication avec les autres à travers le support optique lui-même dit bus. Les moyens de gestion déterminent avant chaque transmission de données la station autorisée à émettre et la ou les stations autorisées à recevoir en envoyant des ordres sur le bus, suivant une procédure définie. Les systèmes en guirlande à fibre optique ne peuvent, à cause du bilan de liaison optique, accepter un nombre élevé de branches de dérivation et d'injection sur la ligne optique commune. Ceux qui sont équipés de répéteurs-régénérateurs introduisent des déphasages et un bruit supplémentaire aboutissant à réduire la bande passante utile, et à limiter la distance maximale entre stations d'abonné éloignées.

Les systèmes utilisant des coupleurs passifs en étoile introduisent un affaiblissement notable du signal optique. Ils font appel à des composants spéciaux qu'il est difficile de doubler et qui prédéterminent les caractéristiques de la transmission optique.

De plus si une station d'abonné est défaillante, le bus optique peut être perturbé et gêner la transmission des autres messages. La recherche de panne ou la vérification des circuits des stations induit des perturbations du même ordre. De tels systèmes prévoient un traitement périodique des voies du bus pour attribuer à chaque station un temps d'émission. Enfin des systèmes plus récents prévoient une programmation des transferts de messages sur le bus pour fournir des possibilités d'accès du bus aux instants sélectionnés par l'abonné. Toutefois l'instant précis où le bus sera disponible dépend du trafic du moment sur les multiples voies d'abonné raccordées au bus et de la configuration du système.

Plus particulièrement, l'invention fait appel en ce qui concerne la transmission optique des informations des stations vers les moyens de gestion, à un système tel que défini dans le préambule de la revendication 1 et divulgué dans le brevet US-A-4 227 260. Dans un tel système, l'accès multiple par répartition dans le temps dans un bus par les émetteurs des stations, tel qu'évoqué précédemment, est supprimé, si bien que les informations émises par les stations dans des voies ou fibres optiques individuelles d'aller vers les moyens de gestion ne se perturbent pas mutuellement lorsque deux stations au moins cherchent à émettre des informations quasi simultanément.

Cependant selon le brevet US, les informations sont retransmises par les moyens de gestion vers les stations par des voies ou fibres optiques individuelles de retour respectives ce qui nécessite dans les moyens de gestion autant d'émetteurs optiques que de stations. Le nombre élevé d'émetteurs optiques augmente le coût du système. En outre, bien que le US-A-4 227 260 ne décrive pas en détail les moyens de gestion pour distribuer des informations émises par des stations vers des récepteurs d'autres stations, il apparaît que, selon certaines réalisations, il est nécessaire de regrouper les informations émises par les stations en un signal électrique commun puis de séparer les informations contenues dans ce signal commun en fonction de leur destination.

La présente invention vise à remédier aux inconvénients des systèmes selon la technique antérieure précédemment évoquée en maintenant l'association de voies optiques individuelles d'aller aux stations, et en effectuant l'accès multiple à répartition dans le temps au niveau de la réception de chaque station grâce à des moyens de gestion permettant à la fois un aiguillage des informations émises par les stations et une concentration de ces informations aiguillées dans une unique voie optique de retour distribuée à toutes les stations. Dans la suite, on conviendra d'appeler un tel système selon l'invention, « pluribus optique ».

A cette fin, un système numérique de transmission optique d'informations selon l'invention est tel que défini dans la revendication 1.

L'émetteur des moyens de gestion transmet la totalité des informations sur ladite voie de retour distribuée ayant un débit nettement plus élevé que celui des voies d'aller. Les moyens de gestion comportent des moyens pour recevoir les informations émises par les stations de façon asynchrone ou synchrone.

Selon d'autres aspects de l'invention, le système peut comprendre un ou plusieurs moyens de gestion et d'autres voies d'aller et d'autres voies de retour soit pour sécuriser un groupe de stations ou pour gérer plusieurs groupes de stations intercommunicant entre eux. Ces différentes combinaisons sont définies dans les revendications dépendantes 4 à 10.

Le système de transmission optique selon l'invention permet un autocontrôle de chaque voie de transmission, de façon quasi permanente, sans que les messages émis par une station perturbent les messages émis par les autres stations. Ainsi le système selon l'invention est affranchi de la vulnérabilité aux parasites radioélectriques ou électromagnétiques des systèmes de transmission traditionnels.

Le système de transmission optique selon l'invention permet également de s'affranchir des inconvénients dus aux limitations en débit numérique dans les bus optiques traditionnels. De plus l'introduction ou la suppression d'un nombre quelconque de stations d'abonné, dans des limites maximales prévues, n'entraîne pas de réglage de la transmission optique ni de modification du logiciel d'exploitation.

Le pluribus optique selon l'invention ne nécessite pas de répéteur actif au niveau de chaque station d'abonné et offre une marge de transmission substantielle autorisant l'utilisation de lignes optiques à fort affaiblissement.

D'autres avantages et caractéristiques de l'invention apparaîtront plus clairement à la lecture de la description suivante de plusieurs réalisations préférées de l'invention en référence aux dessins annexés correspondants dans lesquels :

la figure 1 est un bloc-diagramme schématique d'un système selon l'invention comprenant un organe central et une voie de retour ;

la figure 2 est un bloc-diagramme de l'organe central de concentration et d'aiguillage (OCCA) de la Fig. 1 ;

la figure 3 est une variante de la Fig. 2 ;

la figure 4 est un bloc-diagramme d'une station d'abonné selon la Fig. 1 ;

la figure 5 est un bloc-diagramme d'un système sécurisé selon l'invention comprenant un organe central de secours en plus de celui de la Fig. 1 ;

la figure 6 est une variante de la Fig. 5 avec deux voies de retour distribuées ;

la figure 7 est une variante de la Fig. 1 avec deux voies de retour distribuées ;

la figure 8 est un bloc-diagramme d'un système selon l'invention comprenant deux groupes de stations et de moyens de gestion interconnectés ;

la figure 9 est une variante de la Fig. 8 comprenant deux pluribus fédérés ;

la figure 10 est un bloc-diagramme d'un système selon l'invention avec hiérarchisation de groupes de stations ;

la figure 11 est une variante de la Fig. 1 avec des voies d'aller partagées ;

la figure 12 est une variante de la Fig. 1 selon laquelle le pluribus optique est sécurisé par une redondance particulière ;

la figure 13 est une variante de la Fig. 1 avec redondance de la voie de retour ; et

la figure 14 est une variante de la Fig. 1 avec multiplexage en longueur d'onde.

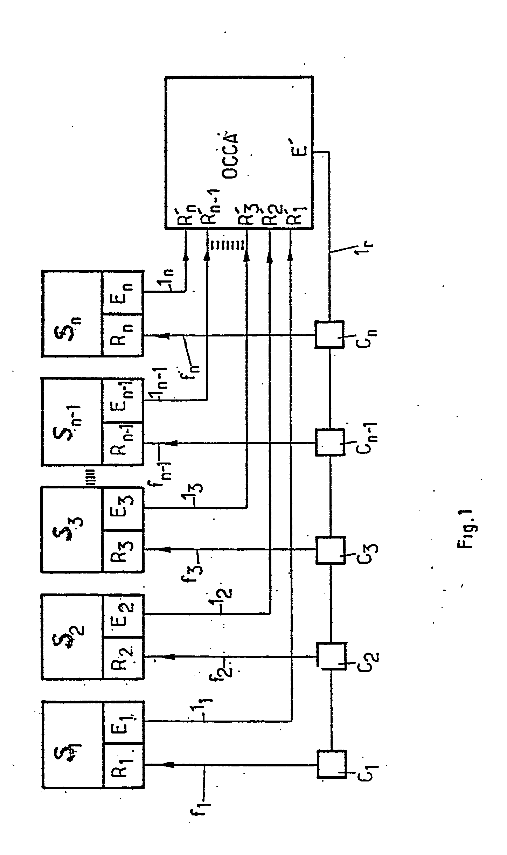

En se référant à la Fig. 1, n stations d'abonné $S_1$, $S_2$, $S_3$, ... $S_{n-1}$, $S_n$ sont reliées chacune, selon l'invention, à un organe central de concentration et d'aiguillage OCCA à travers une voie d'aller optique $1_1$, $1_2$, $1_3$, ... $1_{n-1}$, $1_n$ unidirectionnelle qui est matérialisée par un guide d'onde optique tel qu'une simple fibre optique. Chaque station, où l'entier i est compris entre 1 et n, comporte essentiellement un émetteur $E_i$ et un récepteur $R_i$. Les n voies d'aller $1_1$ à $1_n$, encore appelées lignes optiques d'abonné, sont raccordées respectivement à n récepteurs individuels $R'_1$ à $R'_n$ de l'organe central OCCA. Les n récepteurs $R_1$ à $R_n$ des stations d'abonné $S_1$ à $S_n$ sont reliés, selon l'invention, à une voie de retour optique unique commune unidirectionnelle $1_r$ par l'intermédiaire de fibres de raccordement $f_1$ à $f_n$ qui sont couplées à la voie de retour $1_r$ au moyen de coupleurs optiques $C_1$ à $C_n$ respectivement. L'organe central OCCA transmet les messages sur la voie de retour $1_r$ au moyen d'un simple émetteur E'.

Les messages sont transmis dans les voies sous la forme d'un faisceau lumineux modulé par impulsions codées (MIC). Un message est constitué d'une suite de bits de valeurs binaires 1 et 0. La durée de chaque bit est égale à t. Plusieurs types de codage sont possibles. Par exemple selon la modulation de Manchester, le bit 0 comprend une période d'obscurité d'une durée égale à t/2 suivie par une période d'éclairement de même durée, tandis qu'un bit 1 comprend une période d'éclairement de durée égale à t/2 suivie par une période d'obscurité de même durée. L'invention peut utiliser de la même façon d'autres types de codage, par exemple le code 5 bits-6 bits ou le code CMI.

Ainsi par exemple, le message émis par l'émetteur $E_i$ de la station $S_i$ est transmis par la voie d'aller $1_i$ jusqu'au récepteur $R'_i$ de l'organe central de concentration et d'aiguillage OCCA.

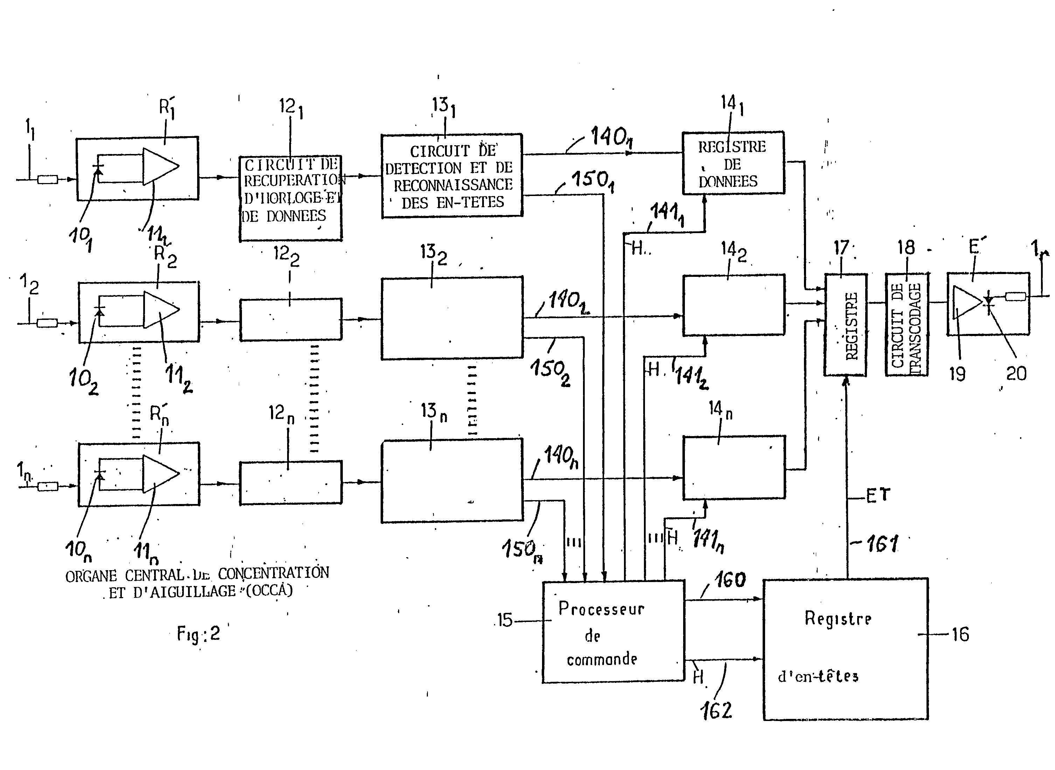

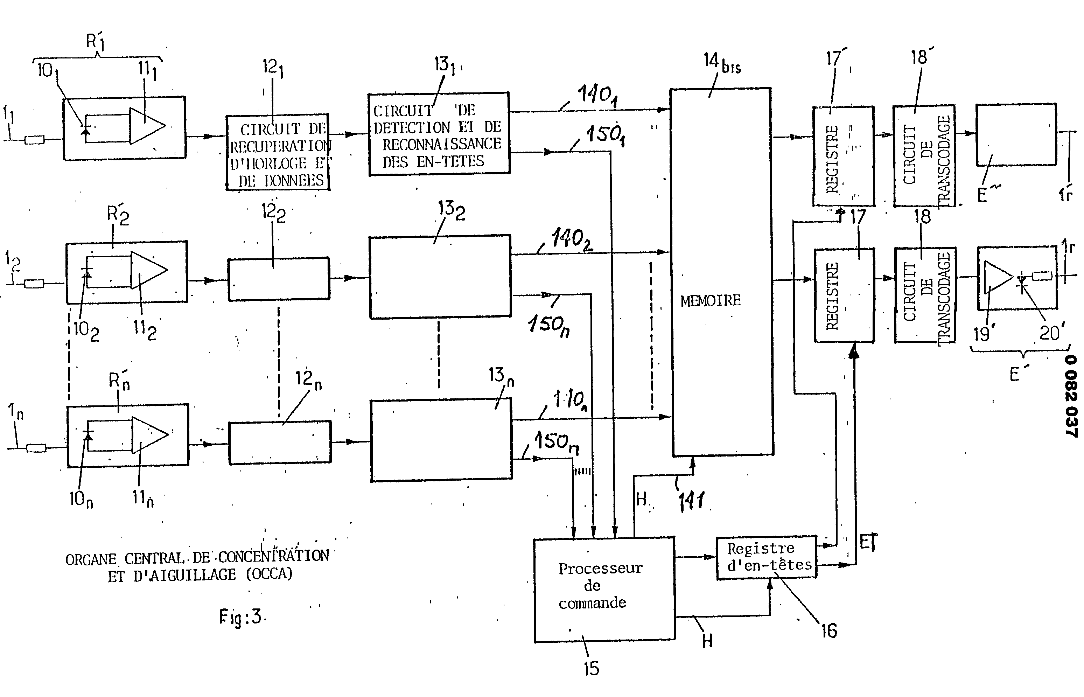

En se référant aux Fig. 2 et 3, chaque récepteur $R'_i$ est constitué essentiellement par un photodétecteur $10_i$ tel qu'un phototransistor ou une photodiode, qui reçoit le faisceau lumineux provenant de la voie optique respective $1_i$. Le photodétecteur $10_i$ est monté aux bornes du circuit d'entrée d'un préamplificateur courant-tension $11_i$ dont la sortie fournit une tension qui est une fonction du courant engendré par le photodétecteur $10_i$.

La sortie du préamplificateur $11_i$ est reliée à l'entrée d'un circuit $12_i$ de récupération d'horloge et de données. De tels circuits sont bien connus dans l'état de la technique. En effet de nombreux circuits de récupération d'horloge d'une transmission d'informations en mode asynchrone ou en mode synchrone ont déjà été divulgués. Toutefois afin de permettre une récupération d'horloge et ne pas utiliser de voie supplémentaire pour transmettre les signaux de synchronisation, le code des messages émis est choisi autosynchronisant. Les codes précités répondent à ce critère.

Dès que le signal d'horloge a été récupéré, les informations sont appliquées à l'entrée d'un circuit de détection et de reconnaissance des entêtes $13_i$. Un en-tête est un mot accompagnant chaque message et précédant les informations utiles du message. Cet en-tête peut être formé d'une urgence, d'un niveau de priorité, d'une information indiquant le type de message, la longueur de ce message, le destinataire, l'origine, etc... Il peut être formé de un ou plusieurs mots. Les en-têtes détectés dans les n circuits de détection et de reconnaissance des en-têtes $13_1$ à $13_n$ sont délivrés respectivement aux n entrées $150_1$ à $150_n$ d'un processeur de commande 15. Ce processeur 15 applique ces en-têtes soit tels quels à l'entrée 160 d'un registre d'en-têtes 16 soit modifiés ou reconstitués en fonction de l'application. En effet le processeur 15 peut commander un fractionnement du message, une répétition de ce message, une servitude en cas de détection d'erreur ou autre et modifier la formulation de cet en-tête. Un aiguillage des messages vers un système dit hiérarchisé ou fédéré peut également être commandé par ce processeur 15 ainsi qu'il sera explicité ultérieurement.

Les circuits de détection et de reconnaissance des en-têtes $13_1$ à $13_n$ fournissent les données aux entrées $140_1$ à $140_n$ de n registres $14_1$ à $14_n$ respectivement. Le processeur 15 fournit un signal d'horloge de lecture H aux registres $14_1$ à $14_n$ *via* des fils $141_1$ à $141_n$, pour y extraire au rythme de l'horloge de lecture les données. Le signal d'horloge de lecture présente selon l'invention, une fréquence élevée de 20 à 40 MHz par exemple ou plus. Un registre 17 reçoit les données sortant des registres $14_1$ à $14_n$ et introduit un entête ET qui correspond au message de données extrait et qui est fourni à travers un fil 161 par le registre d'en-têtes 16 également au rythme du signal d'horloge H appliqué par le processeur *via* un fil 162. L'en-tête ET peut être inséré soit en début de message, soit au milieu si celui-ci est fractionné ou à tout emplacement prédéterminé. Le registre 17 transmet en série les différents messages provenant des n registres $14_1$ à $14_n$ vers la sortie de l'organe central de concentration et d'aiguillage OCCA, et plus précisément à l'entrée d'un circuit de transcodage 18.

On notera que les n registres de données $14_1$ à $14_n$ peuvent être des mémoires organisées en file du type FIFO (First In, First Out), dans chacune desquelles les mots sont écrits successivement les uns au-dessus des autres dans la file et le mot lu est le premier en bas de la file ; les registres $14_1$ à $14_n$ peuvent être toutes autres mémoires vives susceptibles de stocker les données entrantes émises par les stations d'abonné respectives. Toutefois ces n mémoires vives peuvent être remplacées par une mémoire vive 14bis commune aux n voies d'aller comme montré à la Fig. 3. Le circuit 18 reçoit les informations issues du registre 17 et transcode les données sérialisées pour les rendre compatibles avec l'émetteur E'. En effet un seul émetteur E' suffit dans l'organe central de concentration et d'aiguillage OCCA. Il comprend essentiellement un préamplificateur 19 suivi par un élément photoémetteur 20 tel qu'une diode laser ou une diode électroluminescente, qui émet un faisceau lumineux à l'entrée d'une fibre optique $1_r$ formant la voie de retour à grand débit vers les récepteurs $R_1$ à $R_n$ des stations d'abonné $S_1$ à $S_n$.

Le choix du débit de la voie de retour dépend essentiellement du nombre de stations d'abonné $S_1$ à $S_n$ raccordées à l'organe central de concentration et d'aiguillage OCCA et du débit de chacun de ces équipements. La voie de retour est choisie telle que l'ensemble des débits simultanés de ces différents équipements puisse être écoulé avec une marge de taux d'occupation utile très confortable. Dans la pratique on choisit pour la voie de retour un débit de l'ordre de 20 Mbit/s à 40 Mbit/s ou plus.

On notera que le circuit de transcodage 18 transcode les données sur la voie de retour $1_r$ en fonction d'un code qui est généralement différent de celui utilisé sur les différentes voies d'aller $1_1$ à $1_n$.

La réception des informations provenant des n stations $S_1$ à $S_n$ a été décrite ci-dessus de façon asynchrone, ce qui confère une grande souplesse de fonctionnement. Toutefois le système serait également applicable à une transmission synchrone des messages.

Un avantage supplémentaire du système de la voie de retour gérée par l'organe OCCA et distribuée aux stations consiste à reconnaître la priorité des messages entrants et à modifier leur ordre de retransmission après modification éventuelle de leur en-tête. L'organe OCCA effectue un compromis urgence, priorité, débit pour l'écoulement du trafic.

Une modification des en-têtes peut également être avantageuse en cas de datation des données.

Le pluribus optique selon l'invention confère de nombreux avantages à la transmission des messages entre les abonnés. Ainsi l'accès multiple à répartition dans le temps est effectué dans l'organe central OCCA lui-même et sur la voie de retour et non plus sur le bus optique comme dans la technique antérieure. Un tel mode de transmission protège du brouillage dès qu'une station d'abonné est en panne et émet des messages erronés. En outre il permet un autocontrôle dans chaque station par une comparaison du message émis sur la voie d'aller respective avec le message reçu de la voie de retour comme cela apparaîtra lors de la description d'une station d'abonné.

La Fig. 3 représente une réalisation d'organe central de concentration et d'aiguillage OCCA retransmettant les messages sur deux voies de retour $1_r$ et $1'_r$. Supposons que pour des raisons de débit, de redondance ou d'autres raisons, une seconde voie retour $1'_r$ soit nécessaire. A cet effet le processeur 15 permet d'extraire de la mémoire 14bis déjà citée, des informations qui sont ensuite appliquées pour partie à l'entrée du registre 17 et pour partie à l'entrée d'un registre 17′, les messages étant complétés par leur en-tête. De la même façon un circuit de transcodage 18′ est relié à la sortie du registre 17′ et effectue le codage souhaité. Puis les informations sont émises sur les voies $1_r$ et $1′_r$ à travers l'émetteur E′ et un émetteur respectif E″. On notera que la seconde voie de retour $1′_r$ peut éventuellement présenter un débit différent de celui de la voie $1_r$ en fonction du nombre de stations destinataires d'abonné desservies.

Selon la réalisation de la Fig. 3, la mémoire vive 14bis peut encore contenir des en-têtes, le processeur 15 effectuant alors le traitement de ces en-têtes par écriture ou lecture directement dans cette mémoire, le registre 16 étant alors supprimé.

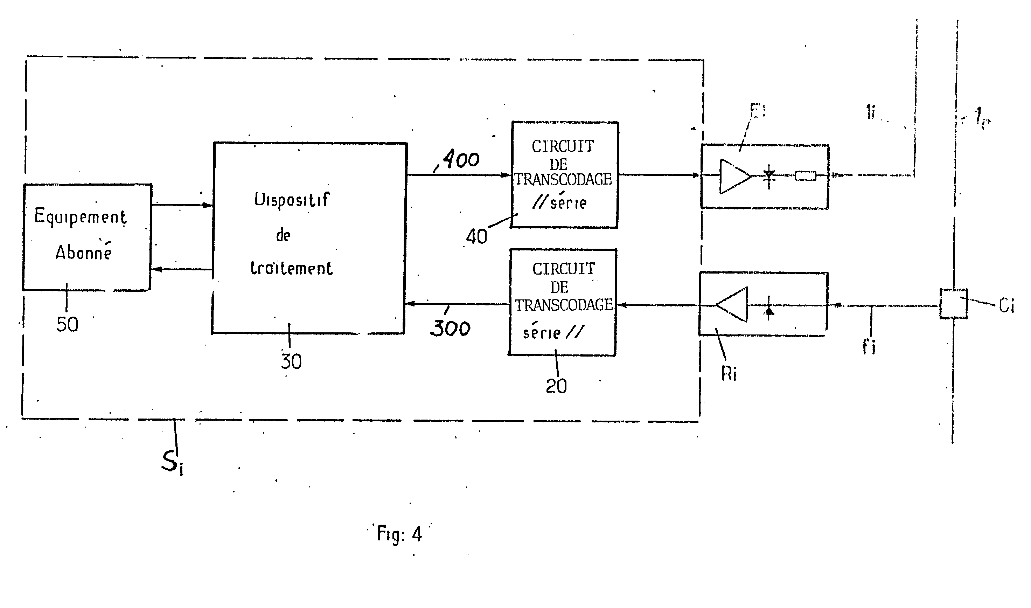

La Fig. 4 représente un mode de réalisation d'une station d'abonné $S_i$ susceptible d'émettre des messages vers un organe central OCCA au moyen de sa voie d'aller respective $1_i$ et de recevoir les messages transmis par la voie de retour $1_r$. Le récepteur $R_i$ de la station $S_i$ est raccordée à la voie de retour $1_r$ au moyen d'une fibre $f_i$ qui est couplée à la voie $1_r$ par un coupleur optique $C_i$. Le récepteur $R_i$ se compose essentiellement d'un photodétecteur, tel qu'une photodiode ou un phototransistor, inséré aux bornes d'un préamplificateur courant-tension. Le récepteur $R_i$ délivre des impulsions électriques en série à l'entrée d'un circuit de transcodage 20. Le circuit 20 effectue essentiellement un décodage des informations reçues, une conversion série-parallèle et une vérification de la parité du signal reçu. Le signal sortant du circuit 20 est appliqué à une entrée 300 d'un dispositif de traitement 30. Le dispositif 30 comporte essentiellement une table de réception des messages et une table d'émission des messages. La table de réception des messages reconnaît en dépendance des en-têtes, d'une part les messages provenant de la station $S_i$, d'autre part les messages provenant d'autres stations et destinés à la station $S_i$. Ainsi un comparateur contenu dans le dispositif 30 vérifie la qualité de la transmission pour tout message par une simple comparaison du message reçu avec le message émis contenu dans la table d'émission. Le comparateur valide et efface le message dans les deux tables de message.

De même le dispositif de traitement 30 comporte une table d'émission des messages où les informations à émettre sur la voie $1_i$ sont rangées et où leurs en-têtes sont préparés en conformité avec l'organisation du pluribus. Les informations sortant de la table d'émission et munies de leur en-tête sont appliquées à l'entrée 400 d'un circuit de transcodage 40 qui code le message, vérifie la parité de ce message et effectue une conversion parallèle-série. Puis le message sortant du circuit 40 subit une transformation électro-optique grâce à l'émetteur $E_i$ qui comprend par exemple une diode électroluminescente qui transmet le message lumineux sur la voie d'aller $1_i$.

Le dispositif de traitement 30 grâce à ses deux tables d'émission et de réception permet de recevoir et d'émettre les messages en parfait synchronisme avec un équipement d'abonné 50 de la station $A_i$.

Des liaisons non représentées entre l'équipement 50 et le dispositif de traitement 30 permettent de gérer l'échange des informations, d'interrompre le transfert des informations ou de signaler toute erreur. C'est le dispositif 30 qui gère la transmission du pluribus, qui garde en mémoire ou répète tout message erroné ou non reçu par l'organe OCCA, et qui signale à l'organe OCCA que la station $S_i$ est prête à recevoir des messages. Le dispositif 30 en résumé surveille la transmission des messages.

Le dispositif 30 peut également être simplifié sans changer le mode de transmission des messages de l'invention. En effet, si l'autocontrôle des messages contenus dans les tables d'émission et de réception n'est pas nécessaire, la station d'abonné se trouve simplifiée. C'est généralement le cas lorsque les tables d'émission sont dans l'équipement d'abonné.

En cas de multiroutage des messages, le dispositif 30 permet également de prévoir des adresses groupées ou des adresses simples. Une telle réalisation est particulièrement intéressante lorsque les pluribus sont hiérarchisés ainsi qu'il sera explicité ultérieurement.

L'invention permet de nombreuses configurations du fait de l'absence de contraintes sur la voie de retour.

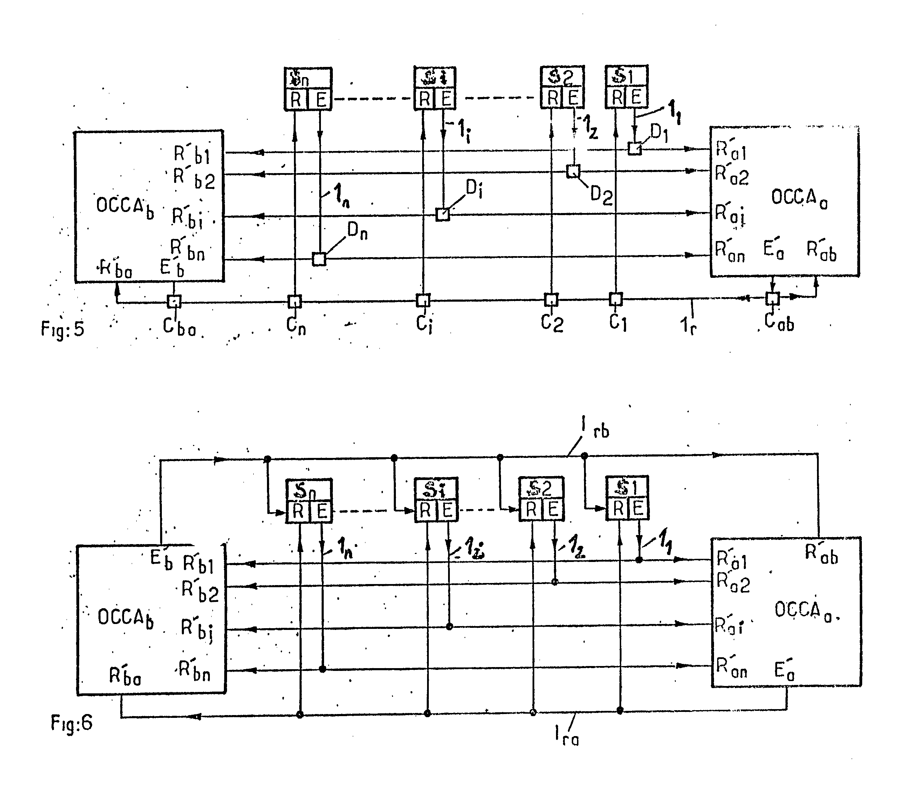

En se référant aux Fig. 5 et 6 une variante de réalisation particulièrement avantageuse de l'invention permet de sécuriser la transmission en doublant l'organe central de concentration et d'aiguillage OCCA. Ainsi deux organes $OCCA_a$ et $OCCA_b$ sont situés à des emplacements distincts séparés d'une distance non négligeable. Les messages, fournis par l'émetteur $E_i$ de la station d'abonné $S_i$ sont reçus par des récepteurs $R′_{ai}$ et $R′_{bi}$ des organes $OCCA_a$ et $OCCA_b$ du type de ceux décrits en référence à la Fig. 2. Un coupleur $D_i$ sépare le faisceau lumineux émis par l'émetteur $E_i$ entre les voies d'aller qui sont raccordées aux récepteurs $R′_{ai}$ et $R′_{bi}$ des organes $OCCA_a$ et $OCCA_b$.

La Fig. 5 toutefois représente une réalisation comportant une seule voie de retour distribuée $1_r$ sur laquelle les informations sont émises soit par l'émetteur $E′_a$ de l'organe $OCCA_a$ soit par l'émetteur $E′_b$ de l'organe $OCCA_b$, un seul étant actif à la fois. En effet la voie de retour $1_r$ est commune aux deux organes $OCCA_a$ et $OCCA_b$ ; elle est raccordée suivant la direction de l'$OCCA_a$ vers l'$OCCA_b$, à l'émetteur $E′_a$ de l'$OCCA_a$ et à un récepteur $R′_{ba}$ de l'$OCCA_b$ via un coupleur $C_{ab}$, les coupleurs $C_1$ à $C_n$ et un coupleur $C_{ba}$, et elle est raccordée suivant la direction inverse de l'$OCCA_b$ vers l'$OCCA_a$, à l'émetteur $E′_b$ de l'$OCCA_a$ et à un récepteur $R′_{ab}$ de l'$OCCA_a$, via le coupleur $C_{ba}$, les coupleurs $C_n$ à $C_1$ et le coupleur $C_{ab}$. Ainsi l'organe $OCCA_b$ en situation secours reçoit de la même façon qu'une station d'abonné la totalité du message à grande vitesse et cet organe $OCCA_b$ est capable de comparer le message sur la voie de retour à grande vitesse reçu par le récepteur $R'_{ba}$, avec les messages reçus par ses propres récepteurs $R'_{bi}$, $R'_{b2}$, ... $R'_{bi}$ ... $R'_{bn}$. Supposons que le message émis sur la voie de retour par l'organe $OCCA_a$ soit erroné, alors une procédure prédéterminée permet d'informer l'organe $OCCA_b$ sur la même voie de retour $1_r$ qu'il prend le relais.

Grâce à son émetteur $E'_b$, l'organe $OCCA_b$ émet alors des messages distribués aux stations d'abonné $S_1$ à $S_n$. Réciproquement l'organe $OCCA_a$ sert alors de secours et reçoit par son récepteur $R'_{ab}$ le message à grande vitesse émis sur la voie de retour par l'organe $OCCA_b$.

La Fig. 6 représente comme la Fig. 5 un pluribus sécurisé par doublement de l'organe OCCA mais avec des voies de retour indépendantes $1_{ra}$ et $1_{rb}$. La voie de retour $1_{ra}$ relie l'émetteur $E'_a$ de l'$OCCA_a$ au récepteur $R'_{ba}$ de l'$OCCA_a$ et à des premiers récepteurs tels que $R_1$ à $R_n$ des stations d'abonné. La voie de retour $1_{rb}$ relie l'émetteur $E'_b$ de l'$OCCA_b$ du récepteur $R'_{ab}$ de l'$OCCA_b$ et à des seconds récepteurs tels que $R'_1$ à $R'_n$ des stations d'abonné. On conviendra de représenter des dérivateurs et coupleurs par des points sur cette Fig. 6 et dans les figures suivantes. Ainsi en référence à la Fig. 6, chaque station d'abonné $S_i$ émet au moyen de son émetteur $E_i$ vers les récepteurs $R'_{ai}$ et $R'_{bi}$ des organes $OCCA_a$ et $OCCA_b$.

Supposons que l'organe $OCCA_a$ soit actif et que l'organe $OCCA_b$ soit en secours, alors l'émetteur $E'_a$ émet sur la voie de retour $1_{ra}$ à grande vitesse la totalité des messages regroupés et les distribue vers les stations d'abonné. Le récepteur $R'_{ba}$ de l'organe $OCCA_b$ de secours reçoit également le message regroupé de la voie $1_{ra}$ et compare ce message avec ceux reçus au moyen de ses propres récepteurs $R'_{b1}$ à $R'_{bn}$ reliés directement aux voies d'aller du pluribus.

Supposons que le message regroupé émis sur la voie de retour $1_{ra}$ soit incorrect, alors une procédure prédéterminée permet à l'organe $OCCA_b$ de se substituer à l'organe $OCCA_a$ et d'émettre sur l'autre voie de retour $1_{rb}$ au moyen de son émetteur $E'_b$.

Réciproquement l'organe $OCCA_a$ se met alors en secours. Les stations d'abonné toutefois sont pourvues dans cette réalisation de seconds récepteurs $R'_1$ à $R'_n$ (non représentés) pour recevoir les messages de la voie de retour $1_{rb}$.

Ainsi les moyens centraux d'aiguillage et de concentration OCCA peuvent être doublés, voire triplés, et ces organes redondants peuvent être situés à des emplacements relativement distants, ce qui réduit le risque de perturbation physique simultané entre ces équipements.

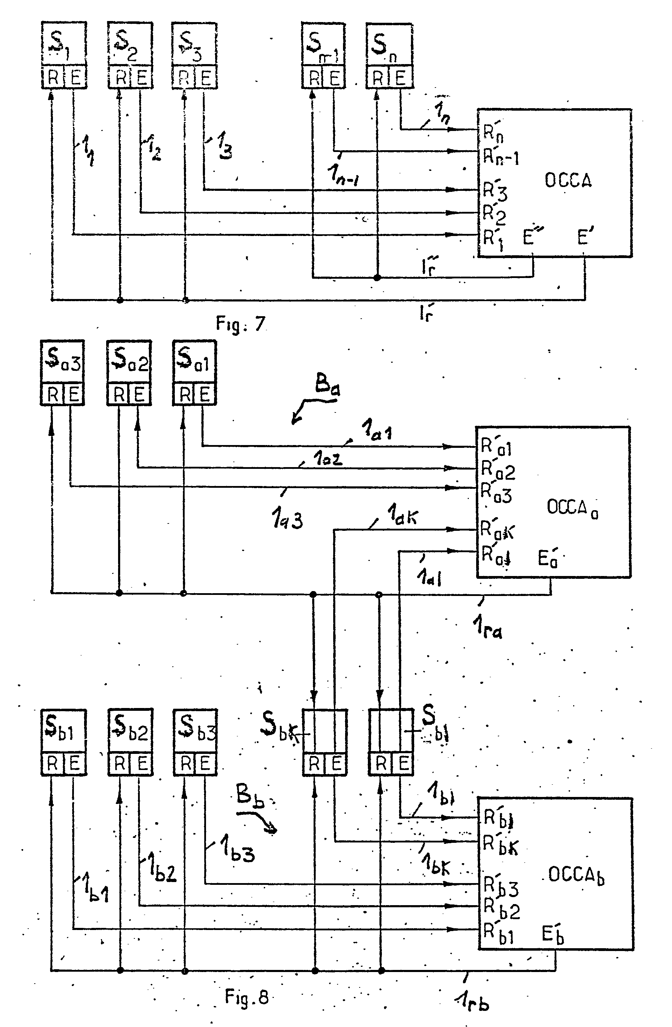

La Fig. 7 représente une configuration de pluribus optique selon l'invention comprenant pour n stations d'abonné deux voies de retour distribuées $1'_r$ et $1''_r$ reliées à un unique organe OCCA. Supposons que deux stations déterminées, par exemple $S_{n-1}$ et $S_n$ doivent pour des raisons d'urgence ou de priorité, disposer d'une grande accessibilité pour recevoir les informations provenant des autres stations. La seconde voie de retour $1''_r$ est alors prévue pour raccorder uniquement ces deux stations d'abonné $S_n$ et $S_{n-1}$ à un émetteur $E''$ individuel de l'organe OCCA. Au contraire les (n — 2) autres stations sont raccordées à un émetteur $E'$ du même organe OCCA qui émet des informations distribuées sur la voie de retour $1_r$. Une telle disposition peut également être nécessaire pour des questions de bilan optique lorsque le nombre de stations en dérivation sur une voie est trop élevé. C'est encore le processeur de commande 15 de l'organe OCCA qui gère les informations à émettre par les émetteurs $E'$ et $E''$, comme déjà mentionné en référence à la Fig. 3.

La Fig. 8 concerne une variante de réalisation de l'invention dans laquelle deux pluribus $B_a$ et $B_b$ sont interconnectés et formés chacun d'un nombre respectif $P_a$, $P_b$ de stations d'abonné et d'un organe central individuel respectif $OCCA_a$, $OCCA_b$. Les organes $OCCA_a$ et $OCCA_b$ ne sont toutefois pas indépendants.

En effet le premier pluribus $B_a$ est raccordé par exemple à $P_a = 3$ stations $S_{a1}$, $S_{a2}$, $S_{a3}$ dont les informations sont transmises par des voies d'aller individuelles $1_{a1}$, $1_{a2}$, $1_{a3}$ et reçues par des récepteurs $R'_{a1}$, $R'_{a2}$, $R'_{a3}$ de l'organe OCCA. En retour l'émetteur $E'_a$ de l'organe $OCCA_a$ transmet sur la voie de retour $1_{ra}$ les informations regroupées vers les récepteurs $R_{a1}$, $R_{a2}$, $R_{a3}$ de ces trois stations. La voie de retour $1_{ra}$ convoie également, selon ce mode de réalisation, des informations destinées à des stations d'abonné $S_{bk}$ et $S_{bl}$ d'un second pluribus $B_b$. Les deux stations d'abonné $S_{bk}$ et $S_{bl}$ sont raccordées au pluribus $B_a$ d'une part par deux premiers récepteurs de ces stations reliés à la voie de retour $1_{ra}$ via des dérivateurs (non représentés), d'autre part à deux récepteurs supplémentaires $R'_{ak}$ et $R'_{al}$ de l'organe $OCCA_a$ via deux émetteurs de ces stations et deux voies optiques d'aller supplémentaires $1_{ak}$ et $1_{al}$.

Le second pluribus $B_b$ raccorde par exemple les émetteurs de $P_b = 3$ stations d'abonné $S_{b1}$, $S_{b2}$, $S_{b3}$ à des récepteurs $R'_{b1}$, $R'_{b2}$, $R'_{b3}$ de l'organe $OCCA_b$ via des voies $1_{b1}$, $1_{b2}$, $1_{b3}$. Les stations d'abonné $S_{b1}$, $S_{b2}$, $S_{b3}$ reçoivent en retour les informations émises par l'émetteur $E'_b$ de l'organe $OCCA_b$ sur la voie de retour distribuée $1_{rb}$. Les stations $S_{bk}$ et $S_{bl}$ disposent chacune d'un second récepteur raccordé à la voie de retour distribuée $1_{rb}$. L'unique émetteur de chaque stations $S_{bk}$, $S_{bl}$ est également raccordé à un récepteur supplémentaire $R'_{bk}$, $R'_{bl}$ de l'organe $OCCA_b$ via une voie d'aller optique supplémentaire $1_{bk}$, $1_{bl}$. Cet unique émetteur est destiné à émettre aussi bien vers l'organe $OCCA_a$ via la voie respective $1_{ak}$, $1_{al}$ que vers l'organe $OCCA_b$ via la voie respective $1_{bk}$, $1_{bl}$.

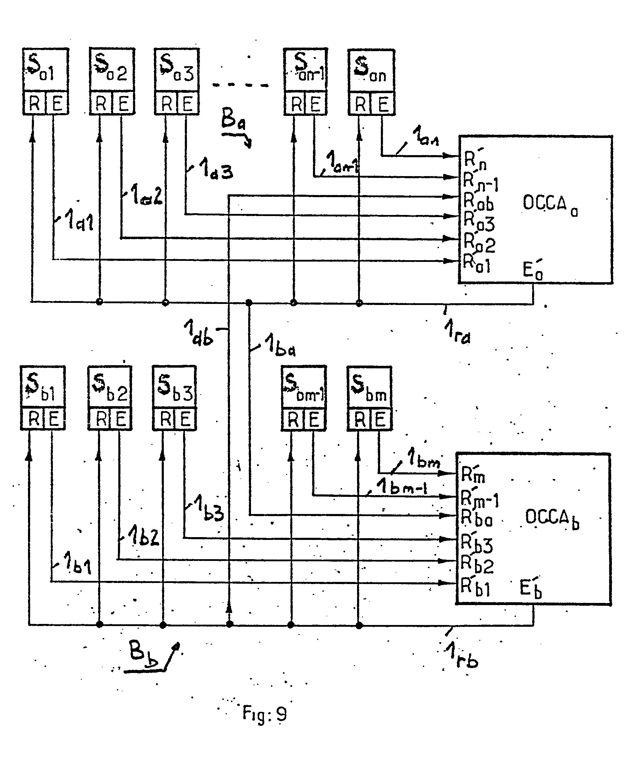

La Fig. 9 concerne un mode de réalisation particulier de deux réseaux pluribus dits fédérés $B_a$, $B_b$. Si le premier pluribus $B_a$ comporte n stations d'abonné $S_{a1}$ à $S_{an}$ reliées à un organe

OCCA$_a$ au moyen de n voies d'aller 1$_{a1}$ à 1$_{an}$ et d'une voie de retour distribuée 1$_{ra}$ et si le second pluribus B$_b$ comporte m stations d'abonné S$_{b1}$ à S$_{bm}$ reliées à un organe OCCA$_b$ au moyen de m voies d'aller 1$_{b1}$ à 1$_{bm}$ et d'une voie de retour distribuée 1$_{rb}$, les deux pluribus sont dits fédérés s'ils communiquent entre eux au moyen de leur voie de retour. Rappelons que la Fig. 8 concernait une communication entre deux pluribus au moyen d'au moins une voie d'aller supplémentaire attribuée à une station d'abonné souhaitant communiquer avec l'autre pluribus. Selon la réalisation de la Fig. 9 la voie de retour 1$_{ra}$, 1$_{rb}$ de chacun des deux pluribus B$_a$, B$_b$ est également distribuée à l'autre pluribus B$_b$, B$_a$. L'information sur la voie de retour 1$_{ra}$ est reçue par un récepteur supplémentaire R'$_{ba}$ dans l'organe OCCA$_b$ tandis que l'information sur la voie de retour 1$_{rb}$ est reçue par un récepteur supplémentaire R'$_{ab}$ dans l'organe OCCA$_b$. Chaque organe OCCA$_a$, OCCA$_b$ reçoit le message de l'autre pluribus B$_b$, B$_a$ comme s'il s'agissait d'une station d'abonné et réémet après discrimination les messages sur sa propre voie de retour 1$_{ra}$, 1$_{rb}$. La station intéressée S$_{a1}$ à S$_{an}$, S$_{b1}$ à S$_{bm}$ par le message de l'autre pluribus B$_b$, B$_a$ reconnaît l'en-tête et reçoit le message qui lui est attribué.

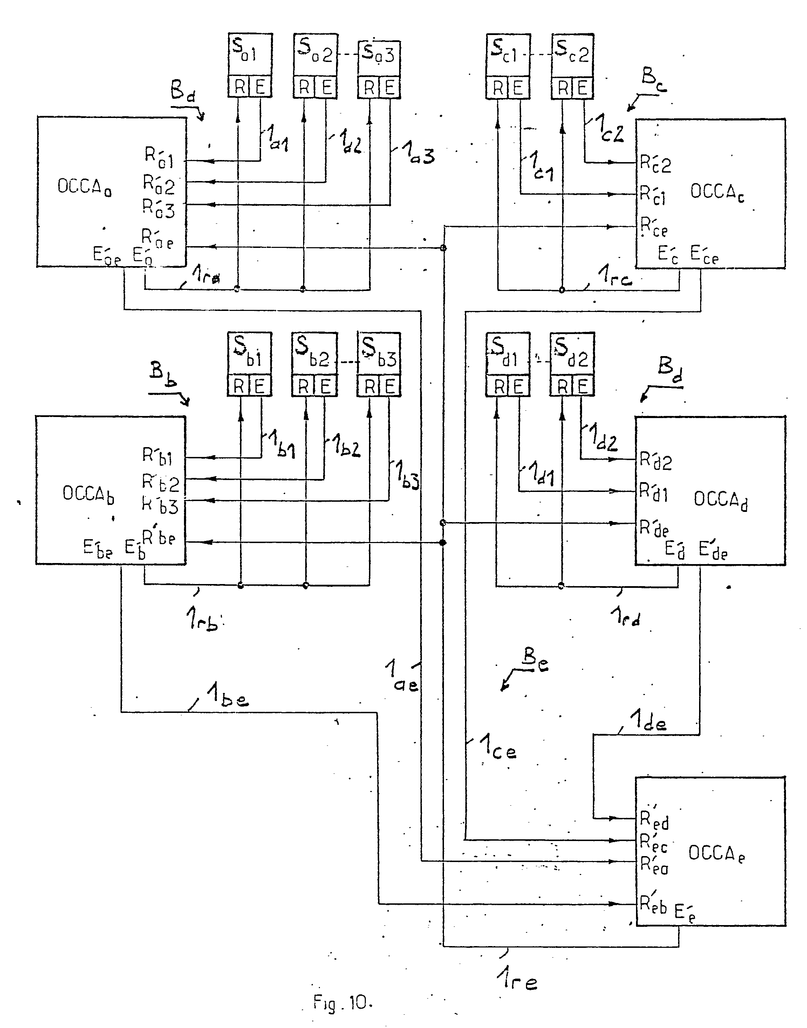

La Fig. 10 montre une réalisation selon laquelle des réseaux pluribus sont hiérarchisés. Les pluribus peuvent intercommuniquer non plus directement par leurs stations comme dans la Fig. 8 ou par leur organe central de concentration et d'aiguillage OCCA$_a$, OCCA$_b$, comme dans la Fig. 9 mais par l'intermédiaire d'un pluribus supplémentaire B$_e$ et d'un organe supplémentaire OCCA$_e$.

Dans la Fig. 10 sont prévus quatre pluribus B$_a$, B$_b$, B$_c$ et B$_d$ qui raccordent bidirectionnellement chacune des stations d'abonné respectives S$_{a1}$, S$_{a2}$, S$_{a3}$ ; S$_{b1}$, S$_{b2}$, S$_{b3}$ ; S$_{c1}$, S$_{c2}$, S$_{c3}$ ; S$_{d1}$, S$_{d2}$ à un organe respectif OCCA$_a$, OCCA$_b$, OCCA$_c$, OCCA$_d$ à travers des voies d'aller individuelles respectives 1$_{a1}$, 1$_{a2}$, 1$_{a3}$ ; 1$_{b1}$, 1$_{b2}$, 1$_{b3}$ ; 1$_{c1}$, 1$_{c2}$ ; 1$_{d1}$, 1$_{d2}$ et une voie de retour commune respective 1$_{ra}$, 1$_{rb}$, 1$_{re}$, 1$_{rd}$. Ainsi des récepteurs R'$_{a1}$, R'$_{a2}$, R'$_{a3}$ de l'organe OCCA$_a$ reçoivent des informations par les stations S$_{a1}$, S$_{a2}$, S$_{a3}$ et son émetteur E'$_a$ renvoie les informations sur la voie de retour 1$_{ra}$ à grande vitesse à destination des stations S$_{a1}$, S$_{a2}$, S$_{a3}$. De la même façon, les autres organes OCCA$_b$, OCCA$_c$. et OCCA$_d$ communiquent avec leurs stations d'abonné respectives à travers leurs voies d'aller individualisées et leur voie de retour commune.

Supposons qu'un certain nombre d'informations collectées par une station telle que S$_{a2}$ du pluribus B$_a$ intéresse une autre station telle que S$_{d2}$ d'un autre pluribus B$_d$. Selon la Fig. 10 il n'est pas prévu une transmission directe d'un pluribus à un autre mais une transmission par l'intermédiaire d'un pluribus B$_e$ dit d'ordre supérieur. Une telle disposition s'appelle la hiérarchisation. Toutes les informations d'un pluribus d'ordre inférieur B$_a$, B$_b$, B$_c$, B$_d$ destinées à un autre pluribus d'ordre inférieur sont aiguillées et transmises au pluribus d'ordre supérieur B$_e$ qui les retourne aux autres pluribus d'ordre inférieur sur une autre voie de retour commune à grande vitesse. Le pluribus B$_e$ est composé de quatre voies d'aller 1$_{ae}$, 1$_{be}$, 1$_{ce}$, 1$_{de}$ qui relient respectivement des émetteurs E'$_{ae}$, E'$_{be}$, E'$_{ce}$, E'$_{de}$ dans les organes OCCA$_a$, OCCA$_b$, OCCA$_c$, OCCA$_d$ à des récepteurs R'$_{ea}$, R'$_{eb}$, R'$_{ec}$, R'$_{ed}$ dans l'organe OCCA$_e$, et d'une voie de retour commune distribuée 1$_{re}$ qui relie un émetteur E'$_e$ de l'organe OCCA$_e$ à des récepteurs R'$_{ae}$, R'$_{be}$, R'$_{ce}$, R'$_{de}$ dans les organes OCCA$_a$, OCCA$_b$, OCCA$_c$, OCCA$_d$. En reprenant l'exemple ci-dessus de la station S$_{a2}$ du pluribus B$_a$ et de la station S$_{d2}$ du pluribus B$_d$ qui souhaitent échanger des informations, l'émetteur E'$_{ae}$ de l'organe OCCA$_a$ communique avec le récepteur R'$_{ea}$ de l'organe central d'ordre supérieur OCCA$_e$. De la même façon chaque pluribus B$_b$, B$_c$, B$_d$ communique avec le pluribus d'ordre supérieur B$_e$ au moyen des émetteurs respectifs E'$_{be}$, E'$_{ce}$, E'$_{de}$ et des récepteurs respectifs R'$_{eb}$, R'$_{ec}$, R'$_{ed}$ pour tous les messages envoyés par ses stations respectives et non destinés à celles-ci. Ainsi chaque organe central d'ordre inférieur OCCA$_a$, OCCA$_b$, OCCA$_c$, OCCA$_d$ joue le rôle de station d'abonné pour le pluribus d'ordre supérieur B$_e$. La voie « extérieure » d'émission 1$_{ae}$, 1$_{be}$, 1$_{ce}$, 1$_{de}$ des pluribus B$_a$, B$_b$, B$_c$, B$_d$ peut également être une voie optique à grande vitesse.

L'organe central d'ordre supérieur OCCA$_e$, également organisé d'une façon analogue à celle montrée dans les Fig. 2 ou 3 émet par son émetteur E'$_e$ les informations sur la voie à grande vitesse distribuée 1$_{re}$ vers tous les pluribus d'ordre inférieur. Chaque organe OCCA$_a$, OCCA$_b$, OCCA$_c$, OCCA$_d$ reçoit par le récepteur respectif R'$_{ae}$, R'$_{be}$, R'$_{ce}$, R'$_{de}$ les informations fournies par le pluribus B$_e$, reconnaît grâce aux en-têtes les informations qui lui sont destinées et retransmet sur sa voie de retour respective 1$_{ra}$, 1$_{rb}$, 1$_{rc}$, 1$_{rd}$ les informations destinées à ses stations d'abonné. Selon la réalisation de la Fig. 10, le pluribus d'ordre supérieur est raccordé qu'à des pluribus d'ordre inférieur. Toutefois il serait également possible que de simples stations d'abonné soient raccordées directement au pluribus d'ordre supérieur B$_e$.

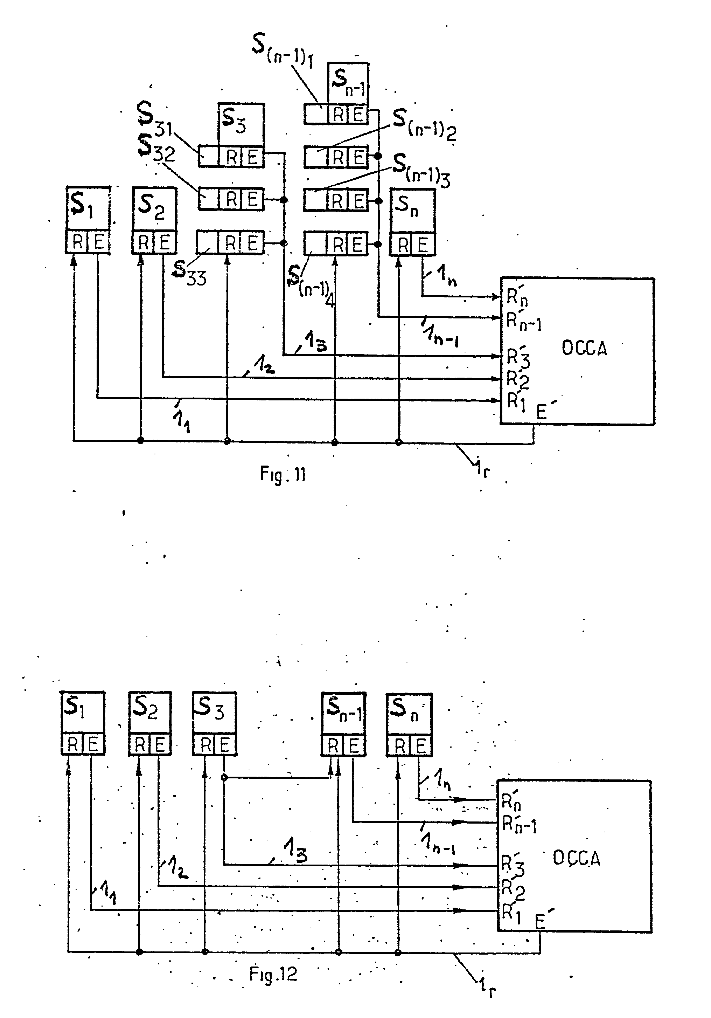

La Fig. 11 représente une réalisation de pluribus optique à voie d'émission partagée. Comme dans la Fig. 1, n stations d'abonné S$_1$ à S$_n$ sont raccordées à un organe central de concentration et d'aiguillage OCCA par l'intermédiaire de voies d'aller individualisées 1$_1$ à 1$_n$ et d'une voie de retour commune 1$_r$. Toutefois certaines stations peuvent être constituées d'un groupement de plusieurs sous-stations d'abonné. Ainsi par exemple la station S$_3$ est constituée par un groupement de trois sous-stations d'abonné S$_{31}$, S$_{32}$ et S$_{33}$ et la station S$_{n-1}$ est constituée par un groupement de quatre sous-stations d'abonné S$_{(n-1)}$, S$_{(n-1)2}$, S$_{(n-1)3}$ et S$_{(n-1)4}$. Chaque sous-station d'abonné possède un émetteur et un récepteur. Toutefois les informations délivrées par les sous-stations d'abonné d'une station telle que S$_3$,

$S_{n-1}$ sont émises à tour de rôle en fonction de l'occupation sur la même voie d'aller $1_3$, $1_{n-1}$ et reçues par le même récepteur $R'_3$, $R'_{n-1}$ de l'organe OCCA. Un protocole interne peut faciliter la durée et la période d'émission de chaque sous-station d'abonné incluse dans la même station. Les sous-stations dans une même station sont avantageusement choisies proches les unes des autres.

La Fig. 12 représente un mode de réalisation avec une redondance particulière. D'une manière analogue à la Fig. 1, n stations $S_1$ à $S_n$ dans la Fig. 12 sont raccordées à un même organe OCCA au moyen d'un pluribus optique comprenant n voies d'aller $1_1$ à $1_n$. Selon la Fig. 12, la station $S_{n-1}$ reçoit des informations provenant de la station $S_3$ qui est reliée directement à la station $S_n$, sans passer par le pluribus optique, au moyen d'une simple fibre optique, d'un dérivateur introduit à la sortie de l'émetteur de la station $S_3$ et d'un second récepteur inclus dans la station $S_{n-1}$. Cette redondance peut être particulièrement intéressante par exemple pour sécuriser une transmission privilégiée de la station $S_3$ vers la station $S_{n-1}$.

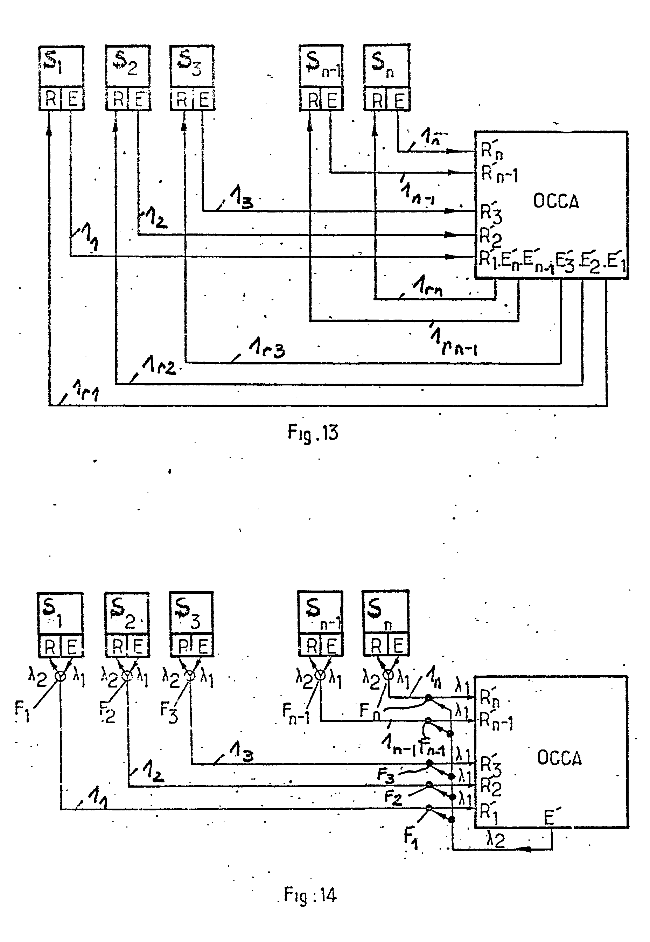

La Fig. 13 représente un système analogue à celui de la Fig. 1, mais dont le pluribus est pourvu d'une multitude de voies de retour à grande vitesse $1_{ra}$ à $1_m$ qui sont desservies par des émetteurs $E'_i$ à $E'_n$ de l'organe OCCA. Ainsi si n stations d'abonné sont raccordées à l'organe OCCA, on peut prévoir également n voies de retour individualisées sur lesquelles les messages sont encore un groupement de messages émis par les stations. Une telle disposition confère une redondance sur la voie de retour du pluribus.

La réalisation montrée à la Fig. 14 est une variante de celle montrée à la Fig. 1. Chaque station d'abonné $S_1$ à $S_n$ est raccordée à l'organe OCCA au moyen d'une voie d'aller individuelle $1_1$ à $1_n$ qui sert également de voie de retour pour la station d'abonné. En effet les messages sont multiplexés en longueur d'onde dans une même fibre optique, une longueur d'onde $\lambda_1$ étant choisie pour l'émission d'une station vers l'organe OCCA et une longueur d'onde $\lambda_2$ différente de $\lambda_1$ étant choisie pour l'émission de l'organe OCCA vers une station. Des paires de filtres séparateurs $F_1$ à $F_n$ biens connus de l'homme du métier sont prévues aux extrémités des voies bidirectionnelles $1_1$ à $1_n$ pour séparer les longueurs d'ondes afin que les émetteurs des stations et les récepteurs $R'_1$ à $R'_n$ de l'organe OCCA fonctionnent à la longueur d'onde $\lambda_1$ et afin que l'émetteur $E'$ de l'organe OCCA et les récepteurs des stations fonctionnent à l'autre longueur d'onde $\lambda_2$.

D'autres configurations non décrites de pluribus résultant de combinaisons des différentes réalisations selon l'invention entrent également dans le cadre de la protection définie par les revendications.

L'invention s'applique tout particulièrement à l'informatique répartie et à la bureautique.

## Revendications

1. Système numérique par transmission optique d'informations comprenant plusieurs stations ($S_1$ à $S_n$) ayant chacune un émetteur optique d'informations ($E_1$ à $E_n$) et un récepteur optique d'informations ($R_1$ à $R_n$), des moyens de gestion (OCCA) pour gérer des émissions et des réceptions d'informations entre les stations comprenant des moyens d'émission optique ($E'$) et autant de récepteurs optiques ($R'_1$ à $R'_n$) que de stations ($S_1$ à $S_n$), et un support de transmission optique bidirectionnelle entre les stations et les moyens de gestion comprenant plusieurs voies individuelles optiques unidirectionnelles d'aller ($1_1$ à $1_n$) pour relier chacune l'émetteur ($E_1$ à $E_n$) d'une station respective ($S_1$ à $S_n$) à un récepteur respectif ($R'_1$ à $R'_n$) des moyens de gestion (OCCA), caractérisé en ce que les moyens de gestion comprennent un unique émetteur ($E'$) et le support de transmission optique comprend une unique voie optique unidirectionnelle de retour distribuée ($1_r$) pour relier l'émetteur unique ($E'$) des moyens de gestion (OCCA) aux récepteurs ($R_1$ à $R_n$) des stations ($S_1$ à $S_n$), en ce que chaque message d'information émis par un émetteur ($E_1$ à $E_n$) de station ($S_1$ à $S_n$) comporte un en-tête émis avec les informations du message et en ce que les moyens de gestion (OCCA) comprennent des moyens $12_1$ à $12_n$ reliés aux récepteurs ($R'_1$ à $R'_n$) des moyens de gestion pour récupérer le signal d'horloge de chaque station ($S_1$ à $S_n$), des moyens ($13_1$ à $13_n$, 15, 16) reliés aux moyens de récupération pour détecter et interpréter les en-têtes des messages émis par les stations, des moyens ($14_1$ à $14_n$) reliés aux moyens de détection et d'interprétation des en-têtes pour mémoriser les informations émises par les stations, des moyens (17) reliés aux moyens de mémorisation et commandés par les moyens de détection et d'interprétation pour regrouper les informations mémorisées avec un en-tête prédéterminé (ET), et des moyens (18) pour transcoder les informations regroupées en vue de les émettre par l'émetteur ($E'$) des moyens de gestion (OCCA).

2. Système conforme à la revendication 1, caractérisé en ce que la voie de retour distribuée ($1_r$) est une voie avant un débit plus élevé que celui des voies d'aller ($1_1$ à $1_n$) afin de retransmettre la totalité des informations émises par les stations ($S_1$ à $S_n$).

3. Système conforme à la revendication 1 à 2, caractérisé en ce que les émissions des informations par les émetteurs ($E_1$ à $E_n$) des stations ($S_1$ à $S_n$) sont synchrones ou asynchrones.

4. Système conforme à l'une des revendications 1 à 3, caractérisé en ce qu'il comprend des seconds moyens de gestion ($OCCA_b$) analogues aux premiers moyens de gestion précités ($OCCA_a$), en ce que les voies d'aller ($1_1$ à $1_n$) sont reliées chacune aux deux récepteurs respectifs ($R'_{a1}$ à $R'_{an}$, $R'_{b1}$ à $R'_{bn}$) des premiers et seconds moyens de gestion ($OCCA_a$, $OCCA_b$) par des dérivateurs optiques ($D_1$ à $D_n$) et en ce que la voie de retour distribuée commune ($1_r$) est bidirection-

nelle et dessert les deux émetteurs (E′$_a$, E′$_b$) des premiers et seconds moyens de gestion (OCCA$_a$, OCCA$_b$) ainsi que deux récepteurs supplémentaires (R′$_{ab}$, R′$_{ba}$) prévus dans les premiers et seconds moyens de gestion.

5. Système conforme à la revendication 4, caractérisé en ce que l'unique voie de retour (1$_r$) est remplacée par deux voies de retour distribuées (1$_{ra}$, 1$_{rb}$) reliant chacune l'émetteur (E′$_a$, E′$_b$) de l'un des premiers et seconds moyens de gestion (OCCA$_a$, OCCA$_b$) au récepteur supplémentaire (R′$_b$, R′$_a$) des autres moyens de gestion (OCCA$_b$, OCCA$_a$) ainsi qu'à un récepteur parmi deux (R$_1$ à R$_n$) prévus dans chaque station (S$_1$ à S$_2$).

6. Système conforme à l'une des revendications 1 à 3, caractérisé en ce qu'il comprend des secondes stations (S$_{b1}$ à S$_{bm}$) et des seconds moyens de gestion (OCCA$_b$) reliés entre eux par des secondes voie d'aller individuelles (1$_{b1}$ à 1$_{bm}$) et une voie de retour distribuée (1$_{rb}$) d'une manière analogue aux voies (1$_{a1}$ à 1$_{an}$, 1$_{ra}$) entre les premières stations (S$_{a1}$ à S$_{an}$) et les premiers moyens de gestion (OCCA$_a$) déjà cités, en ce que les premiers et seconds moyens de gestion (OCCA$_a$, OCCA$_b$) comprennent chacun au moins un récepteur supplémentaire (R′$_{ab}$, R′$_{ba}$) et en ce qu'au moins une voie supplémentaire d'aller (1$_{ab}$, 1$_{ba}$) est distribuée par la voie de retour (1$_{rb}$, 1$_{ra}$) des autres moyens de gestion (OCCA$_b$, OCCA$_a$) et dessert le récepteur supplémentaire (R′$_{ab}$, R′$_{ba}$).

7. Système conforme à la revendication 6, caractérisé en ce qu'il comprend au moins une station suplémentaire (S$_{bk}$ ; S$_{bl}$) qui est introduite sur les deux voies supplémentaires d'aller (1$_{ak}$, 1$_{bk}$ ; 1$_{al}$, 1$_{bl}$) dont l'émetteur est relié aux récepteurs supplémentaires (R′$_{ak}$, R′$_{bk}$ ; R′$_{al}$, R′$_{bl}$) des moyens et dont le récepteur est distribué par les deux voies de retour (1$_{ra}$, 1$_{rb}$).

8. Système conforme à l'une des revendications 1 à 3, caractérisé en ce qu'il comprend plusieurs groupes (a, b, c, d) comprenant chacun plusieurs stations (S$_{a1}$ à S$_{a3}$ ; S$_{b1}$ à S$_{b3}$ ; S$_{c1}$, S$_{c2}$ ; S$_{d1}$, S$_{d2}$) et des moyens de gestion (OCCA$_a$ ; OCCA$_b$ ; OCCA$_c$ ; OCCA$_d$) reliés entre eux par des voies d'aller (1$_{a1}$ à 1$_{a3}$ ; 1$_{b1}$ à 1$_{b3}$ ; 1$_{c1}$, 1$_{c2}$ ; 1$_{d1}$, 1$_{d2}$) et une voie de retour 1$_{ra}$ ; 1$_{rb}$ ; 1$_{rc}$ ; 1$_{rd}$) d'une manière analogue au groupe défini dans la revendication 1, et des moyens de gestion d'ordre supérieur (OCCA$_e$) comprenant des récepteurs (R′$_{ea}$ ; R′$_{eb}$ ; R′$_{ec}$ ; R′$_{ed}$) reliés respectivement à des émetteurs supplémentaires (E′$_{ae}$ ; E′$_{be}$ ; E′$_{ce}$ ; E′$_{de}$) des moyens de gestion (OCCA$_a$ ; OCCA$_b$ ; OCCA$_c$ ; OCCA$_d$) des groupes par des voies d'aller respectives (1$_{ae}$ ; 1$_{be}$ ; 1$_{ce}$ ; 1$_{de}$) et un émetteur unique (E′$_e$) relié à des récepteurs supplémentaires (R′$_{ae}$, R′$_{be}$, R′$_{ce}$, R′$_{de}$) des moyens de gestion des groupes par une voie de retour unique distribuée (1$_{re}$).

9. Système conforme à l'une des revendications 1 à 3, caractérisé en ce que la voie de retour (1$_r$) et les voies d'aller (1$_1$ à 1$_n$) sont remplacées par des voies bidirectionnelles reliant chacune l'émetteur d'une station (S$_1$ à S$_n$) au récepteur respectif (R′$_1$ à R′$_n$) des moyens de gestion (OCCA) et l'émetteur unique (E′) des moyens de gestion au récepteur de la station par l'intermédiaire de deux filtres séparateurs (F$_1$ à F$_n$) et en ce que les informations convoyées sur une même voie sont transmises par multiplexage de deux longueurs d'onde ($\lambda_1$, $\lambda_2$) relativement aux deux sens de transmission.

10. Système conforme à l'une des revendications 1 à 9, caractérisé en ce que les informations convoyées par la voie de retour (1$_r$) sont codées selon un code différent de celui des informations convoyées sur les voies d'aller (1$_1$ à 1$_n$).

**Claims**

1. Digital system with optical information transmission comprising several stations (S$_1$ to S$_n$) each having an optical information transmitter (E$_1$ to E$_n$) and an optical information receiver (R$_1$ to R$_n$), managing means (OCCA) for managing transmissions and receptions of informations between the stations comprising optical transmission means (E′) and as many optical receivers (R′$_1$ to R′$_n$) as stations (S$_1$ to S$_n$), and a bidirectional optical transmission medium between the stations and the managing means comprising several individual optical unidirectional forward lines (1$_1$ to 1$_n$) for each linking the transmitter (E$_1$ to E$_n$) of a respective station (S$_1$ to S$_n$) to a respective receiver (R′$_1$ to R′$_n$) of the managing means (OCCA), characterized in that the managing means comprises a single transmitter (E′) and the optical transmission medium comprises a single optical unidirectional distributed backward line (1$_r$) for linking the single emitter (E′) of the managing means (OCCA) to the receivers (R$_1$ to R$_n$) of the stations (S$_1$ to S$_n$), and in that each information message transmitted from a transmitter (E$_1$ to E$_N$) of station (S$_1$ to S$_n$) includes a heading transmitted with the message informations and in that the managing means (OCCA) comprises means (12$_1$ to 12$_n$) connected to the receivers (R′$_1$ to R′$_n$) of the managing means for recovering the clock signal of each station (S$_1$ to S$_n$), means (13$_1$ to 13$_n$, 15, 16) connected to the recovering means for recognizing and detecting the headings of the messages transmitted from the stations, means (14$_1$ to 14$_n$) connected to the heading recognizing and detecting means for storing the informations transmitted from the stations, means (17) connected to the storing means and controlled by the recognizing and detecting means for grouping the stored informations with a predetermined heading (ET), and means (18) for encoding the grouped informations to transmit it by the transmitter (E′) of the managing means (OCCA).

2. System according to claim 1, characterized in that the distributed backward line (1$_r$) is a line having a higher rate than the rate of the forward lines (1$_1$ to 1$_n$) to transmit back all the informations transmitted from the stations (S$_1$ to S$_n$).

3. System according to claim 1 or 2, characterized in that the information transmissions from the emitters ($E_1$ to $E_n$) of the stations ($S_1$ to $S_n$) are synchronous or asynchronous.

4. System according to one of claims 1 to 3, characterized in that it comprises second managing means ($OCCA_b$) analogous to the aforesaid first managing means ($OCCA_a$), in that the forward lines ($1_1$ to $1_n$) are each connected to the two respective receivers ($R'_{a1}$ to $R'_{an}$, $R'_{b1}$ to $R'_{bn}$) of the first and second managing means ($OCCA_a$, $OCCA_b$) through optical distributing means ($D_1$ to $D_n$), and in that the common distributed backward line ($1_r$) is bidirectional and serves the two transmitters ($E'_a$, $E'_b$) of the first and second managing means ($OCCA_a$, $OCCA_b$) and two additional receivers foreseen in the first and second managing means.

5. System according to claim 4, characterized in that the single backward line ($1_r$) is replaced by two distributed backward lines ($1_{ra}$, $1_{rb}$) each linking the transmitter ($E'_a$, $E'_b$) of one of the first and second managing means ($OCCA_a$, $OCCA_b$) to the additional receiver ($R'_b$, $R'_a$) of the other managing means ($OCCA_b$, $OCCA_a$) and to one of the two receivers ($R_1$ to $R_n$) foreseen in each station ($S_1$ to $S_2$).

6. System according to one of claims 1 to 3, characterized in that it comprises second stations ($S_{b1}$ to $S_{bm}$) and second managing means ($OCCA_b$) interconnected by second individual forward lines ($1_{b1}$ to $1_{bm}$) and by a backward line ($1_{rb}$) distributed in a way analogous to the lines ($1_{a1}$ to $1_{an}$, $1_{ra}$) between the first stations ($S_{a1}$ to $S_{an}$) and the aforesaid first managing means ($OCCA_a$), in that the first and second managing means ($OCCA_a$, $OCCA_b$) each comprises at least an additional receiver ($R'_{ab}$, $R'_{ba}$) and in that at least an additional forward line ($1_{ab}$, $1_{ba}$) is distributed by the backward line ($1_{rb}$, $1_{ra}$) of the other managing means ($OCCA_b$, $OCCA_a$) and serves the additional receiver ($R'_{ab}$, $R'_{ba}$).

7. System according to claim 6, characterized in that it comprises at least an additional station ($S_{bk}$; $S_{b1}$) which is introduced on the two additional forward lines ($1_{ak}$, $1_{bk}$; $1_{a1}$, $1_{b1}$) whose transmitter is connected to the additional receivers ($R'_{ak}$, $R'_{bK}$; $R'_{a1}$, $R'_{b1}$) of the managing means and whose receiver is distributed by the two backward lines ($1_{ra}$, $1_{rb}$).

8. System according to one of claims 1 to 3, characterized in that it comprises several groups (a, b, c, d) each comprising several stations ($S_{a1}$ to $S_{a3}$; $S_{b1}$ to $S_{b3}$; $S_{c1}$, $S_{c2}$; $S_{d1}$, $S_{d2}$) and managing means ($OCCA_a$; $OCCA_b$; $OCCA_c$; $OCCA_d$) interconnected by forward lines ($1_{a1}$ to $1_{a3}$; $1_{b1}$ to $1_{b3}$; $1_{c1}$, $1_{c2}$; $1_{d1}$, $1_{d2}$) and a backward line ($1_{ra}$; $1_{rb}$; $1_{rc}$; $1_{rd}$) in an analogous manner to the group defined in claim 1, and upper rank managing means ($OCCA_e$) comprising receivers ($R'_{ea}$; $R'_{eb}$; $R'_{ec}$; $R'_{ed}$) respectively connected to additional transmitters ($E'_{ae}$; $E'_{be}$; $E'_{ce}$; $E'_{de}$) of the managing means ($OCCA_a$; $OCCA_b$; $OCCA_c$; $OCCA_d$) of the groups by respective forward lines ($1_{ac}$; $1_{be}$; $1_{ce}$; $1_{de}$) and a single transmitter ($E'_e$) connected to additional receivers ($R'_{ae}$; $R'_{be}$; $R'_{ce}$; $R'_{de}$) of the managing means of the groufps by a single distributed backward line ($1_{re}$).

9. System according to one of claims 1 to 3, characterized in that the backward line ($1_r$) and the forward lines ($1_1$ to $1_n$) are replaced by bidirectional lines each connecting the transmitter of a station ($S_1$ to $S_n$) to the respective receiver ($R'_1$ to $R'_n$) of the managing means ($OCCA$) and the single managing means transmitter ($E'$) to the station receiver through two separating filters ($F_1$ to $F_n$) and in that the informations carried on a same line are transmitted by multiplexing two wavelength ($\lambda_1$, $\lambda_2$) respectively for the two transmission directions.

10. System according to one of claims 1 to 9, characterized in that the informations carried on the backward line ($1_r$) are coded in a different code than that of the informations carried on the forward lines ($1_1$ to $1_n$).

## Patentansprüche

1. Digitales System zur optischen Nachrichtenenübertragung, enthaltend mehrere Stationen ($S_1$ bis $S_n$), von denen jede einen optischen Strahler für Informationen ($E_1$ bis $E_n$) und einen optischen Empfänger für Informationen ($R_1$ bis $R_n$) enthält, Verarbeitungseinrichtungen ($OCCA$) zum Verarbeiten der ausgestrahlten und empfangenen Informationen zwischen den Stationen, enthaltend optische Strahlungsvorrichtungen ($E'$) und optische Empfänger ($R_1$ bis $R_n$), wie die Stationen ($S_1$ bis $S_n$), sowie einen Leiter zur optischen Übertragung in beiden Richtungen zwischen den Stationen und den Verarbeitungseinrichtungen, enthaltend mehrere einzelne optische Leiter ($1_1$ bis $1_n$) zum Fluß einer Richtung die jeden Strahler ($E_1$ bis $E_n$) einer jeweiligen Station ($S_1$ bis $S_n$) mit einem jeweiligen Empfänger ($R'_1$ bis $R'_n$) der Verarbeitungseinrichtung verbinden, dadurch gekennzeichnet, daß die Verarbeitungseinrichtung einen einzelnen Strahler ($E'$) enthält, und der Träger der optischen Übertragung einen einzigen optischen Weg in einer Richtung zur Rückverteilung ($1_r$) enthält, der den einen Strahler ($E'$) der Verarbeitungseinrichtung ($OCCA$) mit den Empfängern ($R_1$ bis $R_n$) der Stationen ($S_1$ bis $S_n$) verbindet, daß jede von einem Strahler ($E_1$ bis $E_n$) der Station ($S_1$ bis $S_n$) ausgestrahlte Information einen Kopf enthält, der mit der Information ausgestrahlt wird, und daß die Verarbeitungseinrichtung ($OCCA$) Einrichtungen ($12_1$ bis $12_n$) enthält, die mit den Empfängern ($R'_1$ bis $R'_n$) verbunden sind, Verarbeitungseinrichtungen zum Empfangen des Zeitsignals jeder Station ($S_1$ bis $S_n$), Einrichtungen ($13_1$ bis $13_n$, 15, 16), die mit Empfangseinrichtungen zum Anzeigen und Verwerten der von den Stationen ausgestrahlten Kopfnachrichten verbunden sind, Einrichtungen ($14_1$ bis $14_n$), die mit den Einrichtungen zum Anzeigen und Verwerten der Köpfe verbunden sind, und die von den Stationen ausgesandten Informationen speichern, Einrichtungen (17), die mit den Speichereinrichtungen verbunden sind und von den Anzeige- und Verwertungseinrichtungen gesteuert werden und die mit einem bestimmten Kopf (ET) gespeicherten Informationen umzugruppieren, und Einrichtungen (18) zum Transkodieren der umgruppierten Informationen, um sie mit dem Strahler (E') der Verarbeitungseinrichtung (OCCA) auszustrahlen.

2. System nach Anspruch 1, dadurch gekennzeichnet, daß der Rückverteilungsweg ($1_r$) ein Weg ist, der eine Leistung hat, die wesentlich größer ist als die der Wege ($1_1$ bis $1_n$), um alle von den Stationen ($S_1$ bis $S_n$) ausgestrahlten Informationen zurückzuführen.

3. System nach den Ansprüchen 1 oder 2, dadurch gekennzeichnet, daß die Ausstrahlungen der Informationen der Strahler ($E_1$ bis $E_n$) der Stationen ($S_1$ bis $S_n$) synchron oder asynchron sind.

4. System nach einem der Ansprüche 1 bis 3, dadurch gekennzeichnet, daß es eine der ersten Verarbeitungseinrichtung ($QCCA_a$) analoge zweite Verarbeitungseinrichtung ($OCCA_b$) enthält und daß jeder der Wege ($1_1$ bis $1_n$) mit jeweils zwei Empfängern ($R'_{a1}$ bis $R'_{an}$, $R'_{b1}$ bis $R'_{bn}$) der ersten und zweiten Verarbeitungseinrichtung ($OCCA_a$, $OCCA_b$) über optische Abzweiger ($D_1$ bis $D_n$) verbunden ist, und daß der gewöhnliche Rückverteilungsweg ($1_r$) bidirektionell ist und die beiden Strahler ($E'_a$, $E'_b$) der ersten und zweiten Verarbeitungseinrichtung ($OCCA_a$, $OCCA_b$) und die beiden zusätzlichen Empfänger ($R'_{ab}$, $R'_{ba}$) zwischen der ersten und zweiten Verarbeitungseinrichtung verbindet.

5. System nach Anspruch 4, dadurch gekennzeichnet, daß der einzige Rückweg ($1_r$) durch zwei verschiedene Rückwege ($1_{ra}$, $1_{rb}$) ersetzt ist, die jeden der Strahler ($E'_a$, $E'_b$) von einem der ersten oder zweiten Verarbeitungseinrichtungen ($OCCA_a$, $OCCA_b$) mit dem zusätzlichen Empfänger ($R'_b$, $R'_a$) der anderen Verarbeitungseinrichtung ($OCCA_a$, $OCCA_b$) und zwischen einen der beiden Empfänger ($R_1$ bis $R_n$) in jeder Station ($S_1$ bis $S_2$) verbindet.

6. System nach einem der Ansprüche 1 bis 3, dadurch gekennzeichnet, daß es zweite Stationen ($S_{b1}$ bis $S_{bm}$) und zweite Verarbeitungseinrichtungen ($OCCA_b$) enthält, die unter sich durch verschiedene zweite ($1_{b1}$ bis $1_{bm}$) verbunden sind, sowie einen in analoger Weise wie die Wege ($1_{a1}$ bis $1_{an}$, $1_{ra}$) zwischen den ersten Stationen ($S_{a1}$ bis $S_{an}$) und der ersten Verarbeitungseinrichtung angeordneten ersten Rückverteilungsweg ($1_{rb}$), und daß die erste und zweite Verarbeitungseinrichtung ($OCCA_a$, $OCCA_b$) mindestens einen zusätzlichen Empfänger ($R'_{ab}$, $R'_{ba}$) enthält, und mindestens ein zusätzlicher Weg vom Rückweg ($1_{rb}$, $1_{ra}$) der anderen Verarbeitungseinrichtungen ($OCCA_a$, $OCCA_b$) abzweigt und die zusätzlichen Empfänger ($R'_{ab}$, $R'_{ba}$) verbindet.

7. System nach Anspruch 7, dadurch gekennzeichnet, daß es mindestens eine zusätzliche Station ($S_{bk}$, $S_{b1}$) enthält, die in den beiden zusätzlichen Wegen ($1_{ak}$, $1_{bk}$; $1_{a1}$, $1_{b1}$) liegt, deren Strahler mit den zusätzlichen Empfängern ($R'_{ak}$, $R'_{bk}$; $R'_{a1}$, $R'_{b1}$) der Verarbeitungseinrichtung verbunden ist und deren Empfänger zwischen den beiden Rückwegen ($1_{ra}$, $1_{rb}$) liegt.

8. System nach einem der Ansprüche 1 bis 3, dadurch gekennzeichnet, daß es mehrere Gruppen (a, b, c, d) enthält, von denen jede mehrere Stationen ($S_{a1}$ bis $S_{a3}$; $S_{b1}$ bis $S_{b3}$; $S_{c1}$, $S_{c2}$; $S_{d1}$, $S_{d2}$) und Verarbeitungseinrichtungen ($OCCA_a$; $OCCA_b$; $OCCA_c$; $OCCA_d$), die unter sich durch die Wege ($1_{a1}$ bis $1_{a3}$; $1_{b1}$ bis $1_{b3}$; $1_{c1}$, $1_{c2}$; $1_{d1}$, $1_{d2}$) verbunden sind, und einen Rückweg ($1_{ra}$; $1_{rb}$; $1_{rc}$; $1_{rd}$) in ähnlicher Weise wie die im Anspruch 1 definierte Gruppe, sowie Verarbeitungseinrichtungen ($OCCA_e$) höherer Ordnung, enthaltend Empfänger ($R'_{ea}$; $R'_{eb}$; $R'_{ec}$; $R'_{ed}$), die über die jeweiligen Wege ($1_{ac}$; $1_{be}$; $1_{ce}$; $1_{de}$) mit den zusätzlichen Strahlern ($E'_{ae}$; $E'_{be}$; $E'_{ce}$; $E'_{de}$) der Verarbeitungseinrichtungen ($OCCA_a$; $OCCA_b$; $OCCA_c$; $OCCA_d$) der Gruppen verbunden sind, und einen einzigen Strahler ($E'_e$), der über einen einzigen verzweigten Rückweg ($1_{re}$) mit den zusätzlichen Empfängern ($R'_{ae}$, $R'_{be}$; $R'_{ce}$; $R'_{de}$) der Verarbeitungseinrichtungen der Gruppe verbunden ist.

9. System nach einem der Ansprüche 1 bis 3, dadurch gekennzeichnet, daß der Rückweg ($1_r$) und die Wege ($1_1$ bis $1_n$) durch bidirektionelle Wege ersetzt sind, die jeden Strahler einer Station ($S_1$ bis $S_n$) mit dem jeweiligen Empfänger ($R'_1$ bis $R'_n$) der Verarbeitungseinrichtung (OCCA) und den einzigen Strahler (E') der Verarbeitungseinrichtung mit dem Empfänger der Station durch zwei Separator-Filter ($F_1$ bis $F_n$) verbindet, und daß die auf dem gleichen Weg übertragenen Informationen durch Multiplexierung von zwei Wellenlängen ($\lambda_1$, $\lambda_2$) relativ in zwei Übertragungsrichtungen übertragen werden.

10. System nach einem der Ansprüche 1 bis 9, dadurch gekennzeichnet, daß die übertragenen Informationen auf dem Rückweg ($1_r$) nach einem anderen Code kodiert werden als die auf dem Hinweg ($1_1$ bis $1_n$) übertragenen Informationen.

Fig.1

0 082 037

Fig:2

CIRCUIT DE TRANSCODAGE

REGISTRE

REGISTRE DE DONNEES

CIRCUIT DE DETECTION ET DE RECONNAISSANCE DES EN-TETES

CIRCUIT DE RECUPERATION D'HORLOGE ET DE DONNEES

Processeur de commande

Registre d'en-têtes

ORGANE CENTRAL DE CONCENTRATION ET D'AIGUILLAGE (OCCA)

2

ORGANE CENTRAL DE CONCENTRATION
ET D'AIGUILLAGE (OCCA)

Fig:3

Fig: 4

Fig:5

Fig:6

Fig. 7

Fig. 8

6

Fig: 9

Fig. 10.

Fig. 11

Fig. 12

0 082 037

Fig. 13

Fig: 14